# EUROPÄISCHE PATENTSCHRIFT

(11) **EP 0 715 121 B1**
(45) Veröffentlichungstag und Bekanntmachung des Hinweises auf die Patenterteilung: **26.08.1998**
(21) Anmeldenummer: 95810674.2
(22) Anmeldetag: 30.10.1995
(51) Int. Cl.: F22B 1/30, B01D 47/02

(54) **Verfahren, um das Entstehen von Verkrustungen in einem Wasserbehälter zu verhindern, und Wasserbehälter mit einer Einrichtung zur Durchführung dieses Verfahrens**
Process for preventing the formation of incrustations in a water reservoir and water reservoir with a device for carrying out the process
Procédé pour empêcher la formation d'incrustations dans un réservoir d'eau, et réservoir d'eau avec un dispositif pour la mise en oeuvre du procédé

(30) Priorität: 01.12.1994 CH 3632/94
(43) Veröffentlichungstag der Anmeldung: 05.06.1996
(73) Patentinhaber: Münster AG, 4132 Muttenz (CH)
(72) Erfinder: Wolfer, Patrick, F-68220 Hegenheim (FR); Stirnimann, Pascal, CH-4203 Grellingen (CH); Dändliker, Felix, CH-4106 Therwil (CH); Nordmann, Jacques, CH-4142 Münchenstein (CH)
(74) Vertreter: Eder, Carl E.

(56) Entgegenhaltungen:
- EP-A- 0 277 246
- EP-A- 0 383 327
- EP-A- 0 483 622

## Beschreibung

Der Wasserdurchsatz in einem Dampferzeuger für industrielle Zwecke ist bedeutend. Wird z. B. ein Gerät mit einer Leistung von 15 lt/h während 10 Stunden pro Tag betrieben, so werden 150 Liter Wasser pro Tag, in 100 Tagen (ca. 20 Arbeitswochen) also 15'000 Liter verdampft.

Je nach Wasserhärte bleiben mehr oder weniger feste Rückstände im Gefäss des Dampferzeugers zurück. Die Menge der Rückstände, die in 15'000 Liter Wasser enthalten sind, beträgt bei einer Durchschnittshärte von 17 dH ca. 0,3 g/lt, also bei 15'000 lt 4,5 kg. Die Wasserhärte kann bis zu 40 dH betragen, was eine proportionale Zunahme der Mineralien zur Folge hat.

Ein Teil der Rückstände (ca. 30%) wird durch die automatischen Ablassoperationen des Verdampfungsgerätes mit dem Ablasswasser in Pulverform aus dem Gefäss abgeführt. Der Rest, meist in Form von kleinen Pailletten oder Plättchen, bleibt aber zurück. Diese Plättchen entstehen durch die flächenförmigen Ablagerungen an der Zylinderwand, die durch Ausdehnung und Wirbelung des Wassers abfallen. Diese Ablagerungen fragmentieren sich in Plättchen, die auf den Boden des Zylinders abfallen und sedimentieren. Dort bilden sie ihrerseits eine Grundlage für das Wachstum (Impfung) von Kalksteinen.

Die Plättchen werden mit dem Ablasswasser nicht abgeführt; weil einerseits infolge der vorhandenen Siebe und andern Verengungen die Ablassquerschnitte zu klein sind, und andererseits weil wegen der an sich kurzzeitigen Abschlämmung die Wasserströmung zu klein ist. Des weiteren ist oft die Ablassmenge zu klein und es bilden sich während der Stillstandzeiten feste Blöcke.

Das Gefäss muss daher je nach Wasserhärte in regelmässigen Zeitabständen entweder gereinigt oder ersetzt werden. Zwei Arten von Gefässen sind heute auf dem Markt: Sogenannte Austauschzylinder, also Wegwerfzylinder, und Zylinder, die sich zum Reinigen öffnen lassen. Austauschzylinder, also Elektroden enthaltende, aus einem an sich preiswerten Kunststoff bestehende, leicht ein und ausbaubare Behälter werden heute immer noch verwendet, obwohl einerseits die Preise für die Elektroden angestiegen sind und andererseits die Entsorgung nicht unbedeutende Unkosten verursacht. Es werden derzeit jedoch vermehrt Zylinder verwendet, die geöffnet und gereinigt werden können. Durch das Reinigen wird einerseits der Zeitaufwand für die Wartung vergrössert und andererseits zeigt die Erfahrung, dass ein Zylinder nur dann wieder dicht geschlossen werden kann, wenn die Schliessstelle mit einer neuen Dichtung versehen wird. Zudem können die Mineralienablagerungen auf den Elektroden nicht entfernt werden, da die Inkrustationen sehr stark sind, so dass auch bei den reinigbaren Zylindern die Elektroden von Zeit zu Zeit ausgewechselt werden müssen, wodurch zusätzliche Kosten entstehen.

Obwohl die heute erhältlichen, mit mit Trinkwasser beschickten Elektroden-Luftbefeuchter an sich eine ausgereifte Technik aufweisen und zuverlässig arbeiten, erfüllen sie zwei Anforderungen der Verbraucher noch nicht hinreichend: Sie sind, wie das vorstehend dargelegt ist, einerseits nicht wartungsfrei und anderseits ökologisch nicht optimal, da an sich nicht verbrauchte, aber "verschmutzte" Teile sich nicht reinigen lassen sondern ersetzt werden müssen. Mindestens dann, wenn die Menge der am Boden des Wasserbehälters sich ansammelnden Mineralien so gross ist, dass sie die Elektroden berühren und diese kurzschliessen können, müssen sie durch eine arbeitsintensive Reinigung entfernt werden. Dadurch ist es immerhin möglich, die Lebensdauer um mindestens 50% zu verlängern. Verkrustete Elektroden können jedoch kaum gereinigt sondern müssen ersetzt werden.

Die Aufgabe, die mit der vorliegenden Erfindung gelöst werden soll, besteht nun darin, Mittel und Wege aufzuzeigen und anzugeben, die es möglich machen, die bei der Verwendung von Trinkwasser in Verdampfungsanlagen entstehende Verkrustung der Elektroden zu verhindern, und die andererseits auch die Voraussetzung dafür schaffen, dass die sich am Gefässboden ansammelnden Mineralien durch die üblichen Ablassoperationen entfernt werden können. Ein derartiges Verfahren lässt sich dann nicht nur in Dampferzeugern sondern auch in andern Geräten einsetzen, in welchen Wasser mit irgendwelchen Mineralien und andern sich ausscheidenden Stoffen angereichert wird.

Das erfindungsgemässe Verfahren, mit welchem in einem Wasser und Luft enthaltenden, oben mit einem Dampf- oder Luft-Auslass versehenen Behälter das Entstehen von aus Kalk und andern Mineralien bestehenden Verkrustungen verhindert wird, besteht darin, dass man durch von unten zugeführte Luft mindestens zeitweise eine Verwirbelung des Wassers erzeugt.

Gegenstand des vorliegenden Verfahrens ist auch ein Dampferzeuger gemäss dem Oberbegriff des Anspruches 2, der die im kennzeichnenden Teil dieses Anspruches genannten Merkmale aufweist. Eine weiterer Gegenstand der vorliegenden Erfindung ist eine zur Entstaubung verunreinigter Luft dienende Einrichtung gemäss den Merkmalen des Anspruches 6.

Nachfolgend wird anhand der beiliegenden Zeichnung je ein Ausführungsbeispiel eines erfindungsgemässen Dampferzeugers wie auch einer erfindungsgemässen Luft-Entstaubungseinrichtung beschrieben.

An der Zeichnung zeigt
die Fig. 1 eine rein schematische Darstellung eines mit Elektroden beheizten Dampferzeugers und
die Fig. 2 eine ebenfalls rein schematische Darstellung einer Luftwaschvorrichtung.

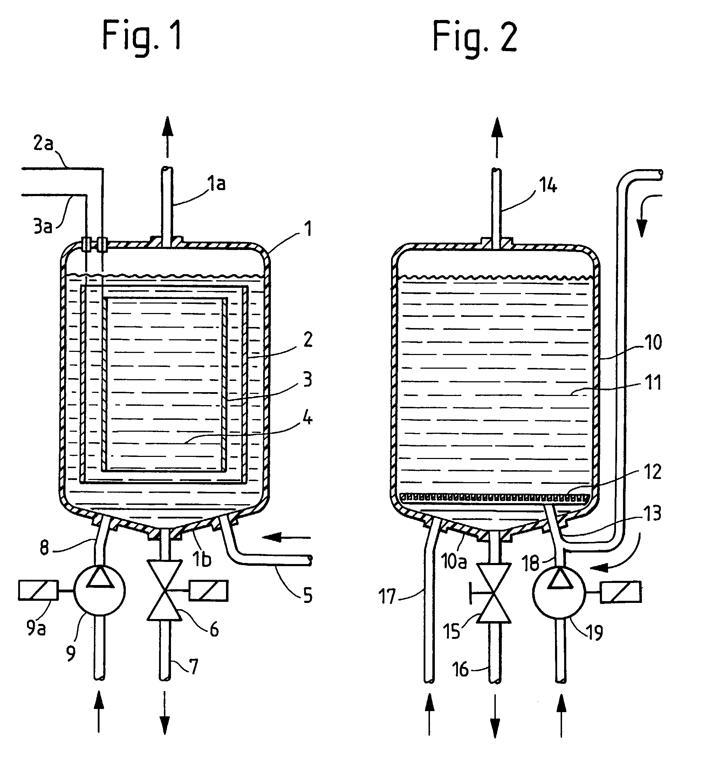

Der in der Fig. 1 dargestellte Dampferzeuger besitzt ein aus Kunststoff bestehendes, im wesentlichen zylinderförmiges Gehäuse 1, in welchem zwei Elektroden 2 und 3 zur Beheizung des Wassers 4 angeordnet sind. Elektrische Leitungen 2a und 3a dienen dazu, die Elektroden über ein nicht gezeichnetes Steuergerät mit einer Stromquelle zu verbinden. Der Zylinder 1 weist oben einen Dampfauslass 1a auf, durch welchen der erzeugte Dampf den Zylinder 1 verlassen und dorthin geleitet werden kann, wo er benötigt wird. Ein Wasserzuleitung 5 mündet im Boden 1b oder in dessen Nähe in den Zylinder. Dieser Boden 1b ist etwa trichterförmig ausgebildet und mündet in den durch ein Elektroventil 6 verschliessbaren Schlammablass 7. Derart aufgebaute und ausgebildete Verdampfergefässe sind an sich bekannt. Neu ist nun die in der Nähe des Bodens 1b oder in den Boden selbst einmündende Luftzuführvorrichtung, die aus einer Luftleitung 8 und einer vorzugsweise elektrisch betätigten Luftpumpe 9 sowie einer Steuervorrichtung 9a für diese Pumpe gebildet wird.

Als Luftpumpe 9 lässt sich beispielsweise eine Membranpumpe mit einer Leistung von ca. 30 W verwenden. Die Steuervorrichtung 9a kann selbstverständlich entweder als Bestandteil der den Dampferzeuger steuernden Elektronik oder als selbständiges Bauelement ausgebildet sein. Die Steuervorrichtung ist so ausgebildet, dass sie periodisch, also beispielsweise in Intervallen von 5 Minuten, die Pumpe für 30 Sekunden einschaltet. Die Wahl der Mindestdauer des Pumpenbetriebes und die maximale Länge der Unterbrüche sind davon abhängig, wie die Luft in den Zylinder einströmt und sich dort beim Aufsteigen verteilt. Versuche haben gezeigt, dass die Inkrustation der Mineralien, also das Entstehen von grössern Mineralgebilden dadurch verhindert wird, dass von Zeit zu Zeit in allen Teilen des Zylinders eine gute Verwirbelung stattfindet. Dann bilden die sich ausscheidenden Mineralien nur ein sehr feines Pulver, das nicht an den Elektroden bleibt, sondern sich auf dem Boden 1b absetzt, von dort jedoch wieder aufgewirbelt wird, bevor es zu einer Verkrustung kommt. Wenn durch Betätigung des Elektroventils 6 der Schlammablass 7 geöffnet wird, wird die ganze Menge des aus Kalk und andern Mineralien bestehenden Pulvers weggeschwemmt. Auf diese Art und Weise lässt sich daher das Entstehen von Verkrustungen verhindern, so dass der entsprechend ausgerüstete Dampferzeuger ein wartungsfreier Dampferzeuger ist.

Das vorstehend beschriebene Verfahren, mit welchem sich in einem Wasser enthaltenden Gefäss das Entstehen von Mineralienverkrustungen dadurch verhindern lässt, dass das Wasser periodisch durch eine von unten erfolgende Zuführung von Luft aufgewirbelt wird, lässt sich nicht nur bei Dampferzeugern, sondern auch bei andern Gefässen, wie zum Beispiel bei einem Gefäss, in welchem Luft gewaschen wird, anwenden. In der Fig. 2 der beiliegenden Zeichnung ist ein solches Gefäss mit 10 bezeichnet. In diesem Gefäss, das zum grössten Teil mit Waschwasser 11 gefüllt ist, befindet sich in der Nähe des Gefässbodens 10a eine Verteilanlage 12, bei welchem es sich um eine mit Löchern versehene Rohrschlange oder Platte handeln kann und an die die Luftzufuhrleitung 13 für die im Wasser zu waschende Luft angeschlossen ist. Oben mündet das Gefäss 10 in die Luftableitung 14, unten ist es über ein Ventil 15 mit der Abschlammleitung 16 verbunden. Zum Nachfüllen des Wassers dient die Wasserzuleitung 17.

Wenn nun während längerer Zeit die Luftzufuhr unterbrochen ist, weil keine Luft gewaschen werden muss, wird sich erfahrungsgemäss ein Teil der aus der bereits gewaschenen Luft ausgeschiedenen Bestandteile verkrusten, so dass eine vollständige Abschlammung nicht möglich ist. Um diesen Mangel zu beheben, d.h. das Verkrusten zu verhindern, wird nun durch die Hilfsleitung 18 mit Hilfe der Luftpumpe 19 periodisch Luft eingeblasen, die eine Durchwirbelung des Wassers bewirkt und dadurch das Entstehen einer Verkrustung verhindert. Zur Verteilung dieser Hilfsluft kann, wie das in der Zeichnung dargestellt ist, die Verteilanlage 17 benützt werden. Es ist aber auch möglich eine zusätzliche Verteilanlage für die Hilfsluft einzusetzen.

## Patentansprüche

1. Verfahren, um in einem Wasser und Luft enthaltenden, oben mit einem Dampf- oder Luft-Auslass versehenen Behälter das Entstehen von aus Kalk und andern Mineralien bestehenden Verkrustungen zu verhindern, dadurch gekennzeichnet, dass man durch von unten zugeführte Luft mindestens zeitweise eine Verwirbelung des Wassers erzeugt.

2. Dampferzeuger mit einem mit einer Wasserzuleitung (5), einer Heizeinrichtung (2/3), einem unverschlossenen Dampfauslass (1a) sowie einem Schlammablass (6/7) versehenen Wasserbehälter (1), dadurch gekennzeichnet, dass der Wasserbehälter zur Durchführung des Verfahrens nach Anspruch 1 mit einer im Boden (1b) oder in Bodennähe einmündenden Luftzuführvorrichtung (8/9/9a) versehen ist.

3. Dampferzeuger nach Anspruch 2, dadurch gekennzeichnet, dass die Luftzuführvorrichtung eine eine Luftpumpe (9) enthaltende Luftleitung (8) ist.

4. Dampferzeuger nach Anspruch 3, dadurch gekennzeichnet, dass die Luftpumpe (9) mit einer Steuervorrichtung (9a) zum periodischen Ein- und Ausschalten versehen ist.

5. Dampferzeuger nach Anspruch 3, dadurch gekennzeichnet, dass die Luftpumpe (9) eine Membranpumpe ist.

6. Zur Entstaubung verunreinigter Luft dienende Einrichtung mit einem unten eine Zu- (13) und oben eine Ablassleitung (14) für die zu reinigende Luft sowie unten einen Schlammablass (14/15/16) aufweisenden Wasserbehälter (10), dadurch gekennzeichnet, dass der Wasserbehälter zur Durchführung des Verfahrens nach Anspruch 1 mit einer im Boden (10a) oder in Bodennähe einmündenden, eine Luftpumpe (19) enthaltenden Hilfs-Luftzuführung (18) versehen ist, wobei diese Luftpumpe mit einer Steuervorrichtung versehen ist, die zum periodischen Ein- und Ausschalten dient.

7. Einrichtung nach Anspruch 6, dadurch gekennzeichnet, dass die Luftpumpe eine Membranpumpe ist.

## Claims

1. Process for preventing the formation of incrustations consisting of lime and other minerals in a container containing water and air and provided at the top with a steam or air outlet, characterized in that turbulence is produced in the water at least from time to time by air fed in from below.

2. Steam generator having a water container (1) provided with a water supply pipe (5), a heating means (2/3), an open steam outlet (la) and a sludge grain (6/7), characterized in that, for carrying out the process according to Claim 1, the water container is provided with an air feed apparatus (8/9/9a) entering in the base (1b) or in the vicinity of the base.

3. Steam generator according to Claim 2, characterized in that the air feed apparatus is an air pipe (8) containing an air pump (9).

4. Steam generator according to Claim 3, characterized in that the air pump (9) is provided with a control apparatus (9a) for periodic switching on and off.

5. Steam generator according to Claim 3, characterized in that the air pump (9) is a diaphragm pump.

6. Device which serves for removing dust from contaminated air and has a water container (10) having a supply pipe (13) at the bottom and an outlet pipe (14) at the top for the air to be purified and a sludge drain (14/15/16) at the bottom, characterized in that, for carrying out the process according to Claim 1, the water container is provided with an auxiliary air supply (18) entering in the base (10a) or in the vicinity of the base and containing an air pump (19), this air pump being provided with a control apparatus which serves for periodic switching on and off.

7. Device according to Claim 6, characterized in that the air pump is a diaphragm pump.

## Revendications

1. Procédé pour éviter la formation d'incrustation de chaux ou d'autres minéraux dans un réservoir contenant de l'eau et de l'air et muni en haut d'une sortie de vapeur ou d'air, caractérisé en ce que l'on produit un tourbillon dans l'eau au moins périodiquement, en insufflant de l'air par le bas.

2. Générateur de vapeur comprenant un réservoir d'eau (1) muni d'une conduite d'arrivée d'eau (5), d'un dispositif de chauffage (2/3), d'une sortie de vapeur non obturée (1a), ainsi que d'une évacuation des boues (6/7), caractérisé en ce que le réservoir d'eau pour mettre en oeuvre le procédé selon la revendication 1 est muni d'un dispositif d'amenée d'air (8/9/9a) débouchant dans le fond (1b) ou à proximité du fond.

3. Générateur de vapeur selon la revendication 2, caractérisé en ce que le dispositif d'amenée d'air est une conduite d'air (8) contenant une pompe à air (9).

4. Générateur de vapeur selon la revendication 3, caractérisé en ce que la pompe à air (9) est munie d'un dispositif de commande (9a) pour sa mise en marche et son arrêt périodiques.

5. Générateur de vapeur selon la revendication 3, caractérisé en ce que la pompe à air (9) est une pompe à membrane.

6. Dispositif servant à dépoussiérer de l'air impur, comprenant un réservoir d'eau (10) présentant en bas une conduite d'arrivée (13) et en haut une conduite d'évacuation (14) pour l'air à purifier, et comportant également en bas une évacuation des boues (14/15/16), caractérisé en ce que le réservoir d'eau destiné à mettre en oeuvre le procédé selon la revendication 1 est muni d'une arrivée d'air auxiliaire (18) présentant une pompe à air (19) et débouchant dans le fond (10a) ou à proximité du fond, cette pompe à air étant munie d'un dispositif de commande servant à la mettre en marche et à l'arrêter périodiquement.

7. Dispositif selon la revendication 6, caractérisé en ce que la pompe à air est une pompe à membrane.
